# EUROPEAN PATENT APPLICATION

(11) **EP 3 985 011 A1**
(43) Date of publication of application: **20.04.2022**
(21) Application number: 20201877.6
(22) Date of filing: 14.10.2020
(51) Int. Cl.: C07F 9/78

(54) **METHOD FOR MAKING ACETARSOL**

(71) Applicant: Umicore AG & Co. KG, 63457 Hanau (DE)
(72) Inventor: EMSERMANN, Jens, 64546 Mörfelden-Walldorf (DE); WOERNER, Eileen, 61130 Nidderau (DE); KARCH, Ralf, 63801 Kleinostheim (DE); DOPPIU, Angelino, 63500 Seligenstadt (DE); FREY, Annika, 63457 Hanau (DE); BÄHR, Alexandra, 63796 Kahl am Main (DE)

(57) **Abstract**

The present patent application describes a new method for making acetarsol by reduction of roxarsone and acetylation of the reduction product.

## Description

Acetarsol is an active pharmaceutical ingredient used for the treatment of proctitis, amoebiasis and trichomoniasis that turned out to also be an effective treatment of syphilis.

Although known by Paul Ehrlich since 1911, who employed it as an intermediate for the preparation of arsphenamine analogues, it was produced later under the trade name stovarsol by Poulenc Fréres (Walter Sneader: Drug Discovery A History. John Wiley & Sons, 2005, p. 55).

F. v. Bruchhausen, Siegfried Ebel, A. W. Frahm, E. Hackenthal: Hagers Hand-buch der Pharmazeutischen Praxis, Stoffe A-D. Springer-Verlag, 2013, p. 22 shows that acetarsol can be prepared from 4-chloro aniline by reaction with sodium nitrite and sodium orthoarsenite to 4-chloro-3-nitro-phenylarsonic acid, which in turn may be reacted with sodium thiosulfate and sodium hydroxide to 3-amino-4-hydroxy-phenylarsonic acid that can be transformed to acetarsol by reaction with acetic anhydride.

Raiziss and Fisher, JACS 1926, (48), 1323-1327 shows a method for making acetarsol by reduction of roxarsone with sodium dithionite followed by reaction of the intermediate with two equivalents of acetic anhydride. This procedure has the disadvantage of being very exothermic and thus unsuitable for large scale production.

It was an object of the invention to provide a method for making acetarsol that is suitable for large scale production in excellent yields and high purities. This problem is solved by a method for making acetarsol from roxarsone comprising the steps
- Reduction of roxarsone with a sugar at a pH value of greater than 8 in an aqueous solvent at a temperature of 50 °C to 90°C;
- Lowering the pH-Value to less than 5 to precipitate 3-amino-4-hydroxy-phenylarsonic acid;
- Acetylation of 3-amino-4-hydroxy-phenylarsonic acid with acetic anhydride in an aqueous solvent at a temperature of 10°C to 80°C to obtain acetarsol.

The first step, the reduction of roxarsone, provides the intermediate 3-amino-4-hydroxy-phenylarsonic acid. It is carried out in a polar, protic solvent that contains water. More specifically, mater is used as the solvent which may contain other solvents, such as water soluble alcohol or ketones, such as methanol, ethanol, isopropanol or acetone.

In general, all suitable sugars may be employed as reducing agent, but glucose has shown to be cheap, very effective and easy to obtain.

The sugar, more specifically glucose, can be employed in amounts of more than 1.5 equivalents and less than 2.5 equivalents of a sugar in relation to roxarsone, in particular from 1.6 to 2.4 equivalents or from 1.9 to 2.1 equivalents.

The reduction of roxarsone may be carried out at 50°C to 90°C, or 60°C to 85°C, or 65°C to 80°C, in particular at 65°C to 85°C.

It was observed that the reduction can be readily and conveniently carried out in the presence of a base. The base may present in amounts of 5.5 to 13 equivalents of base, in relation to roxarsone, in particular 10.8 to 12.5 equivalents of base, more specifically 11 to 12 equivalents of base. Suitable bases are, for example, alkaline metal, earth alkaline metal or ammonium hydroxides. In general, potassium hydroxide or sodium hydroxide have been used successfully.

The reduction may be carried out by adding sugar to roxarsone or by adding roxarsone to sugar. For practical reasons, namely limiting exposure to or contamination with roxarsone, it is preferred to place roxarsone in the reactor and adding the sugar, for example glucose, to the roxarsone. The sugar may be added as a solid, as a solution or a suspension in a preferably aqueous solvent. Addition of the sugar may be carried out in portions or continuously. Specifically, the reduction can be carried out by adding the sugar, glucose, to roxarsone in the reactor in portions or continuously as necessary.

After combination of roxarsone and the sugar, more specifically after addition of glucose to roxarsone, the mixture is stirred for 1 to 4 hours at a first temperature and for 14 to 30 hours at a second temperature, wherein both the first temperature and the second temperature are from 50°C to 90°C.

In one embodiment, the first temperature is higher than the second temperature.

In another embodiment, the first temperature is as high as the second temperature or higher.

If the reaction mixture has developed a dark color, a dithionite compound, such as sodium dithionite, can be added in an amount of 5 to 15 mol%, or 8 to 12 mol% in relation to roxarsone, followed by stirring for up to an hour or up to 30 minutes to diminish the discoloration.

In order to precipitate the reaction product of the reduction, which is 3-amino-4-hydroxy-phenylarsonic acid, reaction mixture from the reduction is advantageously cooled, for example to a temperature less than or equal to 50°C or less, or at a temperature of 20°C or less than or equal to 10°C, followed by adding acid in a sufficient amount to adjust the pH value to less than 5, more specifically less than 3, in particular to a pH value between 4.5 and 2.5.

In general, mineral acids can be employed, such as sulfuric acid or hydrochloric acid. Care should be taken to avoid temperature increase above 20°C, in particular 30°C. Once the pH value is adjusted to less than 5 or more specifically to less than 3, the 3-amino-4-hydroxy-phenylarsonic acid will precipitate can be filtered off, washed with water and an alcohol such as ethanol and dried.

In the acetylation step, the intermediate 3-amino-4-hydroxy-phenylarsonic acid is reacted with acetic anhydride to obtain acetarsol.

This reaction is also carried out in an aqueous solvent as described above, preferably in water. The intermediate 3-amino-4-hydroxy-phenylarsonic acid can be partially or completely suspended in the solvent, more specifically water.

The acetylation is carried out preferably with 5 to 10, in particular 6 to 9 or 7 to 8 or 6 to 8 equivalents of acetic anhydride, in relation to 3-amino-4-hydroxy-phenylarsonic acid.

To this suspension, acetic anhydride is added continuously or in portions to ensure the reaction temperature will be in the range of from 10°C to 80°C, or from 20°C to 50°C or from 15°C to 40°C.

The acetylation can be carried out for 5 hours to 10 hour, or for 6 hours to 9 hours or 2 hours to 7 hours. Stirring or standing overnight does not impair the yield of the end product. After the reaction, cooling to ambient temperature is permitted and the end product, acetarsol, does precipitate and can be washed with water, ethanol and can be dried.

In order to ensure a highly pure end product, it has been found out to be practical to further purify the end product acetarsol as well as the intermediate 3-amino-4-hydroxy-phenylarsonic acid. This can be obtained by dissolving the respective compounds in an aqueous medium, exposition to charcoal, filtration and re-precipitation. In general, both compounds can in principal be dissolved in basic or acidic aqueous media.

More specifically, the precipitated 3-amino-4-hydroxy-phenylarsonic acid is dissolved in an acidic aqueous solution, stirred with charcoal, precipitated and filtered. The 3-amino-4-hydroxy-phenylarsonic acid can be suspended in water and about two equivalents of acid, in particular hydrochloric acid, can be added to the suspension generated to obtain a solution.

Acid should be added slowly to avoid excessive heating of the mixture, then charcoal is added and stirred for approximately 30 minutes to two hours.

The amount of charcoal can be determined by the artisan in a few experiments and is dependent on the degree of purity of the 3-amino-4-hydroxy-phenylarsonic acid and the charcoal used. In general, 20g to 60g, or 30g to 50g per kg of 3-amino-4-hydroxy-phenylarsonic acid will usually be sufficient.

After filtration over a suitable filter medium such as blue ribbon an appropriate amount of base is added to adjust the pH value to less than 5, more specifically less than 3, in particular to a pH value between 4.5 and 2.5. Usually an aqueous solution of alkali metal hydroxide, such as potassium hydroxide or sodium hydroxide can be employed.

About a quantitative amount of base can be dissolved in water and slowly added to the filtered solution of the intermediate 3-amino-4-hydroxy-phenylarsonic acid until the pH value described above is achieved and the purified 3-amino-4-hydroxy-phenylarsonic acid can be filtered, washed with water and ethanol and dried for further use.

For the purpose of obtaining a highly pure end product, the acetarsol obtained from the acetylation is dissolved in alkaline aqueous solution, stirred with charcoal, precipitated and filtered. The acetarsol can be suspended in water and a solution of about one equivalent of base up to three equivalents of base, such as sodium hydroxide or potassium hydroxide, is added to the suspension so obtained.

Base should be added slowly to avoid excessive heating of the mixture, then charcoal is added and stirred for approximately 30 minutes to two hours.

The amount of charcoal can be determined by the artisan in a few experiments and is dependent on the degree of purity of the acetarsol and the charcoal used. In general, 20g to 60g, or 30g to 50g per kg of acetarsol will usually be sufficient.

After filtration over a suitable filter medium such as blue ribbon an appropriate amount of acid is added to adjust the pH value to less than 5, more specifically less than 3, in particular to a pH value between 4.5 and 2.5. Usually a mineral acid such as sulfuric acid or hydrochloric acid can be employed successfully.

About 3 equivalents of acid in relation to acetarsol, such as hydrochloric acid, is slowly added to the filtered solution of the acetarsol until the pH value described above is achieved and purified acetarsol can be filtered, washed with water and ethanol and dried for further use.

It has been found to be particularly useful to employ two purification steps in which acetarsol, the intermediate 3-amino-4-hydroxy-phenylarsonic acid or both are purified by dissolving an exposing to charcoal.

More specifically, it was found to be particularly useful to carry out one of the purification steps in an acidic aqueous medium and the respective other in an alkalic aqueous medium. For example, as described above the intermediate 3-amino-4-hydroxy-phenylarsonic acid may be purified by dissolving in an acidic medium and exposing to charcoal while the the acetarsol may be purified by dissolving in a basic medium and exposing to charcoal.

### Examples

### Example 1: Reduction of Roxarsone with Glucose to obtain 3-amino-4-hydroxy-phenylarsonic acid

A reactor with stirrer and cryostat was charged with 1.5 L of water and cooled to 10°C. 583.3 g (14.6 mol) of sodium hydroxide pellets were added portionwise and in such a way that the temperature did not oncrease to more than 60°C. After the sodium hydroxide had dissolved, the solution was allowed to cool to about 20°C and 320 g (1.22 mol) of roxarsone was added portionwise. At the same time, 481.7 g (2.43 mol) glucose monohydrate was added to 1.8 L of water and stirred until dissolved completely.
After the roxarsone had dissolved, the temperature of the cryostat was set to 80°C and the content of the reactor was heated to 70°C. At 70°C the cryostat is set to 60°C and the glucose solution is added dropwise to the content of the reactor. If the temperature exceeded 77°C, the addition of the glucose solution was stopped and it was made sure the temperature never changed to less than 65°C.
After addition of the glucose solution, the mixture was stirred for 2 hours at 70°C, with the cryostat set to 74°C, followed by stirring at 50°C for 19 hours (cryostat at 53°C), followed by allowing the reactor to cool to 20°C. At this point in time, the color of the reaction mixture was checked in order to add 21.2 g (0.12 mol) of a 10% solution of sodium dithionite in water in one portion and stirring for another 10 minutes. The reaction mixture did merely show a weak discoloration, so no addition of sodium dithionite was carried out.
1.43 kg of 37% hydrochloric acid (14.5 mol) was added dropwise until pH 3 was reached and the 3-amino-4-hydroxy-phenylarsonic acid precipitated, which was filtrated, washed with 2 L of water and 1 L of ethanol and dried for 20 hours at 40°C in vacuo. The 3-amino-4-hydroxy-phenylarsonic acid was obtained as a dark red solid at a yield of 88.7%, purity 99.3%.

### Example 1a:

Carried out as in Example 1, but with addition of sodium dithionite resulted in a product with a lighter reddish hue, yield: 86%, purity 99.58%.

### Example 2: Acetylation of 3-amino-4-hydroxy-phenylarsonic acid with acetic anhydride to obtain acetarsol

3-amino-4-hydroxy-phenylarsonic acid (231.9 g, 995 mmol) was weighed in a 2 L container and suspended in 500 mL of water and the suspension charged into a 10 L reactor. The container was washed two times with half a liter of water for two times, with the water being also charged into the reactor. The reactor content is stirred at 20°C. Acetic anhydride (609 g, 5.97 mol, 6 equivalents) are added dropwise into the reactor within one hour and stirred for two hours at 20°C. Hydrochloric acid (37%, 98 g) is added in one portion and the reactor content is stirred for an additional 30 minute. The suspension so obtained is filtrated and the acetarsol so obtained is washed two times with 300 mL of water, once with 250 mL of ethanol and dried in vacuo for 20 hours at 40°C. Yield: 92%, purity 99.5%.

### Example 3: Purification of 3-amino-4-hydroxy-phenylarsonic acid, obtained by reduction of Roxarsone with Glucose

251.8 g (1.08 mol) of 3-amino-4-hydroxy-phenylarsonic acid with a purity of 99.3% was weighed in a 2 L container and suspended in 1 L of water and the suspension charged into a 10 L reactor. The container was washed two times with 750 mL of water for two times, with the water being also charged into the reactor. The reactor content is stirred at ambient temperature. Hydrochloric acid with a concentration of 37% (319.4 g, 3.24 mol, 3 equivalents) was added dropwise, followed by 10 g of charcoal (Norit C Extra USP) and stirred for one hour and filtered. A solution of 123.9 g of sodium hydroxide (3.1 mol, 3 equivalents) in 200 mL of water was added slowly to the filtrate at ambient temperature while stirring. The purified 3-amino-4-hydroxy-phenylarsonic acid precipitated, was filtered, washed with 1 L of water and half a liter of ethanol and dried at 40°C in vacuo.
The purified 3-amino-4-hydroxy-phenylarsonic acid exhibited a light-reddish to cream-colored / off-white hue and a purity of 99.8%, obtained in a yield of 93%.

### Example 4: Purification of acetarsol obtained by acetylation of 3-amino-4-hydroxy-phenylarsonic acid with acetic anhydride

Acetarsol (249.4 g, 907mmol) with a purity of 99.5% was weighed in a 2 L container and suspended in 1 L of water and the suspension charged into a 10 L reactor. The container was washed two times with 500 mL of water, with the water being also charged into the reactor. The reactor content was stirred at ambient temperature. A 50% aqueous sodium hydroxide solution (87.1 g, 1.09 mol, 1.2 equivalents) was added dropwise into the reactor at 20°C, followed by 10 g of charcoal (Norit C Extra USP), stirred for one hour and filtered. Hydrochloric acid (37%, 268 g, 2.72 mol, 3 equivalents) was added dropwise at 20°C under vigorous stirring. After the addition was completed, the stirring was continued for another 30 minutes and the precipitated acetarsol was filtered, washed with 1 L of water and 500 mL of ethanol and dried in vacuo at 40°C. The purified acetarsol was obtained as a cream-colored / off-white solid with a purity of 99.9% in a yield of 95.2%.

## Claims

1. Method for making acetarsol from roxarsone comprising the steps
- Reduction of roxarsone with a sugar at a pH value of greater than 8 in an aqueous solvent at a temperature of 50 °C to 90°C;
- Lowering the pH-Value to less than 5 to precipitate 3-amino-4-hydroxy-phenylarsonic acid;
- Acetylation of 3-amino-4-hydroxy-phenylarsonic acid with acetic anhydride in an aqueous solvent at a temperature of 10°C to 80°C to obtain acetarsol.

2. Method of claim 1, wherein the sugar employed in the reduction of roxarsone is glucose.

3. Method of claims 1 or 2, wherein more than 1.5 equivalents and less than 2.5 equivalents of a sugar in relation to roxarsone is employed, in particular from 1.6 to 2.4 equivalents or from 1.9 to 2.1 equivalents.

4. Method of any of claims 1 to 3, the reduction being carried out at 50°C to 90°C or 60°C to 85°C, or 65°C to 80°C, in particular at 65°C to 85°C.

5. Method of any of claims 1 to 4, wherein the reduction is carried out in the presence of 5.5 to 13 equivalents of base, in relation to roxarsone, in particular 10.8 to 12.5 equivalents of base, more specifically 11 to 12 equivalents of base.

6. Method of any of claims 1 to 5, wherein the reduction is carried out in the presence of an alkaline metal hydroxide as base, in particular potassium hydroxide or sodium hydroxide.

7. Method of any of claims 1 to 6, wherein the reduction is carried out by adding the sugar to the roxarsone in portions or continuously.

8. Method of any of claims 1 to 7, wherein the reduction is stirred after combination of roxarsone and the sugar for 1 to 4 hours at a first temperature and for an additional 14 to 30 hours at a second temperature, with the first and the second temperature each being from 50°C to 90°C and the second temperature being lower than the first temperature.

9. Method of any of claims 1 to 8, wherein before precipitation of 3-amino-4-hydroxy-phenylarsonic acid a dithionite compound is added.

10. Method of any of claims 1 to 9, wherein after the reduction the pH value is lowered to 2.5 to 4.5.

11. Method of any of claims 1 to 10, wherein the acetylation is carried out with the 3-amino-4-hydroxy-phenylarsonic acid being completely or partially suspended in the aqueous solvent.

12. Method of any of claims 1 to 11, wherein the acetylation is carried out by adding acetic anhydride to the 3-amino-4-hydroxy-phenylarsonic acid in portions or continuously.

13. Method of any of claims 1 to 12, wherein the acetylation is carried out at a temperature of 10°C to 80°C or 20°C to 50°C or 15°C to 40°C.

14. Method of any of claims 1 to 13, wherein the acetylation is carried out for 5 hours to 10 hour, or for 6 hours to 9 hours or 2 hours to 7 hours.

15. Method of any of claims 1 to 14, wherein the acetylation is carried out with 5 to 10, in particular 6 to 9 or 7 to 8 or 6 to 8 equivalents of acetic anhydride.

16. Method of any of claims 1 to 15, wherein the precipitated 3-amino-4-hydroxy-phenylarsonic acid, the acetarsol or both are further purified by dissolving in an aqueous medium, exhibiting to charcoal and filtration followed by re-precipitation.

17. Method of any of claims 1 to 16, wherein the precipitated 3-amino-4-hydroxy-phenylarsonic acid is dissolved in an acidic aqueous solution, stirred with charcoal, precipitated and filtered.

18. Method of any of claims 1 to 17, wherein the acetarsol obtained from the acetylation is dissolved in alkaline aqueous solution, stirred with charcoal, precipitated and filtered.
